# EUROPEAN PATENT APPLICATION

(11) **EP 4 841 552 A1**
(43) Date of publication of application: **18.11.2026**
(21) Application number: 24916605.9
(22) Date of filing: 29.11.2024
(51) Int. Cl.: G06T 3/04, G06T 5/50, G06F 9/451

(54) **SPECIAL-EFFECT PROCESSING METHOD AND APPARATUS, AND ELECTRONIC DEVICE AND STORAGE MEDIUM**

(30) Priority: 10.01.2024 CN 202410040075
(71) Applicant: Beijing Zitiao Network Technology Co., Ltd., Beijing 100190 (CN)
(72) Inventor: MO, Hongxin, Beijing 100028 (CN); LU, Yan, Beijing 100028 (CN); ZHU, Houguang, Beijing 100028 (CN); LIAO, Yunhao, Beijing 100028 (CN)
(74) Representative: Grünecker Patent- und Rechtsanwälte PartG mbB
(86) International application number: PCT/CN2024/135846
(87) International publication number: WO 2025/148557

(57) **Abstract**

Embodiments of the present disclosure provide an effect processing method and apparatus, an electronic device and a storage medium. The method includes: acquiring at least one image to be processed in response to an image setting trigger operation, wherein a number of target objects comprised in all images to be processed is multiple; and displaying an effect image obtained by fusing the multiple target objects into a target template image in response to an effect displaying trigger operation.

## Description

### CROSS-REFERENCE TO RELATED APPLICATION(S)

The present application claims priority to Chinese Patent Application No. 202410040075.6, filed on January 10, 2024 and entitled "SPECIAL-EFFECT PROCESSING METHOD AND APPARATUS, AND ELECTRONIC DEVICE AND STORAGE MEDIUM", which is incorporated herein by reference in its entirety.

### FIELD

Embodiments of the present disclosure relate to computer application technologies, and in particular, to an effect processing method and apparatus, an electronic device and a storage medium.

### BACKGROUND

With the development of computer vision technology, there are more and more types of effect props. At the same time, more and more users apply effect props in image processing to enrich image display effects.

However, the related effect processing technology usually processes a single image to be processed, which makes the generation material of the effect image relatively limited, and the generated effect image has a monotonous effect and lacks interest, thus affecting the effect processing experience.

### SUMMARY

The present disclosure provides an effect processing method and apparatus, an electronic device and a storage medium.

In a first aspect, embodiments of the present disclosure provide an effect processing method, including: acquiring at least one image to be processed in response to an image setting trigger operation, where a number of target objects included in all images to be processed is multiple; and displaying an effect image obtained by fusing the multiple target objects into a target template image in response to an effect displaying trigger operation..

In a second aspect, embodiments of the present disclosure provide an effect processing apparatus, including: an image setting module, configured to acquire at least one image to be processed in response to an image setting trigger operation, where a number of target objects included in all images to be processed is multiple; and an effect display module, configured to display an effect image obtained by fusing the multiple target objects into a target template image in response to an effect displaying trigger operation.

In a third aspect, embodiments of the present disclosure provide an electronic device, including: one or more processors; and a storage, configured to store one or more programs, and the one or more programs when executed by the one or more processors, cause the one or more processors to implement the effect processing method according to any of embodiments of the present disclosure.

In a fourth aspect, embodiments of the present disclosure provide a storage medium including computer executable instructions, and the computer executable instructions, when executed by a computer processor, are used for executing the effect processing method according to any of embodiments of the present disclosure.

In the technical solution of the embodiments of the present disclosure, by acquiring at least one image to be processed in response to an image setting trigger operation, custom setting of the image to be processed is supported, and multiple target objects in one or more images to be processed enrich generation materials of the effect image, and more custom fusion contents are supported. By displaying an effect image obtained by fusing the multiple target objects into a target template image in response to an effect displaying trigger operation, technical problems in the related art that a display effect of the effect image is monotonous and lacks interest are solved, interaction manners of effect processing and display effects of the effect image are enriched, and the effect processing experience is improved.

### BRIEF DESCRIPTION OF THE DRAWINGS

The above and other features, advantages and aspects of the embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
Fig. 1A is a schematic flowchart of an effect processing method according to embodiments of the present disclosure;
Fig. 1B is a schematic diagram of an interaction interface that may be used for the effect processing method according to the embodiments of the present disclosure;
Fig. 1C is a schematic diagram of switching logic between an existing camera mode and an existing upload mode;
Fig. 1D is a schematic diagram of switching logic between a camera mode and an upload mode that may be used for the effect processing method according to the embodiments of the present disclosure;
Fig. 1E is a schematic flowchart of an optional example implemented based on the effect processing method according to the embodiments of the present disclosure;
Fig. 1F is a schematic flowchart of an optional example implemented based on the effect processing method according to the embodiments of the present disclosure;
Fig. 1G is a schematic flowchart of another optional example implemented based on the effect processing method according to the embodiments of the present disclosure;
Fig. 1H is a schematic flowchart of yet another optional example implemented based on the effect processing method according to the embodiments of the present disclosure;
Fig. 2A is a schematic flowchart of another effect processing method according to embodiments of the present disclosure;
Fig. 2B is a schematic diagram of another interaction interface that may be used for the effect processing method according to the embodiments of the present disclosure;
Fig. 3A is a schematic flowchart of yet another effect processing method according to embodiments of the present disclosure;
Fig. 3B is a schematic diagram of yet another interaction interface that may be used for the effect processing method according to the embodiments of the present disclosure;
Fig. 3C is a schematic diagram of an interface where two target objects are displayed on a screen and that may be used for the effect processing method according to the embodiments of the present disclosure;
Fig. 3D is a schematic diagram of an interface where three target objects are displayed on a screen and that may be used for the effect processing method according to the embodiments of the present disclosure;
Fig. 3E is a schematic diagram of an interface where five target objects are displayed on a screen and that may be used for the effect processing method according to the embodiments of the present disclosure;
Fig. 3F is a schematic flowchart of another optional example implemented based on the effect processing method according to the embodiments of the present disclosure;
Fig. 4 is a schematic structural diagram of an effect processing apparatus according to embodiments of the present disclosure; and
Fig. 5 is a schematic structural diagram of an electronic device according to embodiments of the present disclosure.

### DETAILED DESCRIPTION OF EMBODIMENTS

Embodiments of the present disclosure will be described in more detail below with reference to the drawings. Although certain embodiments of the present disclosure are shown in the drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only for exemplary purposes, and are not intended to limit the protection scope of the present disclosure.

It should be understood that the various steps described in the method implementations of the present disclosure may be performed in different orders and/or in parallel. Furthermore, the method implementations may include additional steps and/or omit the execution of the illustrated steps. The scope of the present disclosure is not limited in this regard.

As used herein, the term "include/comprise" and variations thereof are open-ended inclusions, that is, "include/comprise but not limited to". The term "based on" is "based at least in part on". The term "one embodiment" means "at least one embodiment"; the term "another embodiment" means "at least one other embodiment"; and the term "some embodiments" means "at least some embodiments". Relevant definitions of other terms will be given in the following description.

It should be noted that the concepts such as "first" and "second" mentioned in the present disclosure are only used to distinguish different apparatuses, modules or units, and are not used to limit the order or interdependence of the functions performed by these apparatuses, modules or units.

It should be noted that the modifications of "one" and "multiple" mentioned in the present disclosure are schematic rather than restrictive, and those skilled in the art should understand that unless otherwise clearly indicated in the context, they should be understood as "one or more".

The names of messages or information exchanged between multiple apparatuses in the implementations of the present disclosure are for illustrative purposes only, and are not intended to limit the scope of these messages or information.

It may be understood that before using the technical solutions disclosed in the embodiments of the present disclosure, the user should be informed of the type, range of use, use scenarios, etc. of personal information involved in the present disclosure in an appropriate manner and obtain the authorization of the user in accordance with relevant laws and regulations.

For example, in response to receiving an active request from a user, prompt information is sent to the user to clearly prompt the user that the requested operation will require access to and use of the user's personal information. Thus, the user may independently choose, based on the prompt information, whether to provide the personal information to software or hardware, such as an electronic device, an application, a server or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only schematic and does not constitute a limitation on the implementations of the present disclosure, and other manners that satisfy the relevant laws and regulations may also be applied to the implementations of the present disclosure.

It may be understood that the data involved in the technical solution (including but not limited to the data itself, acquisition or use of the data) should comply with requirements of corresponding laws, regulations and related provisions.

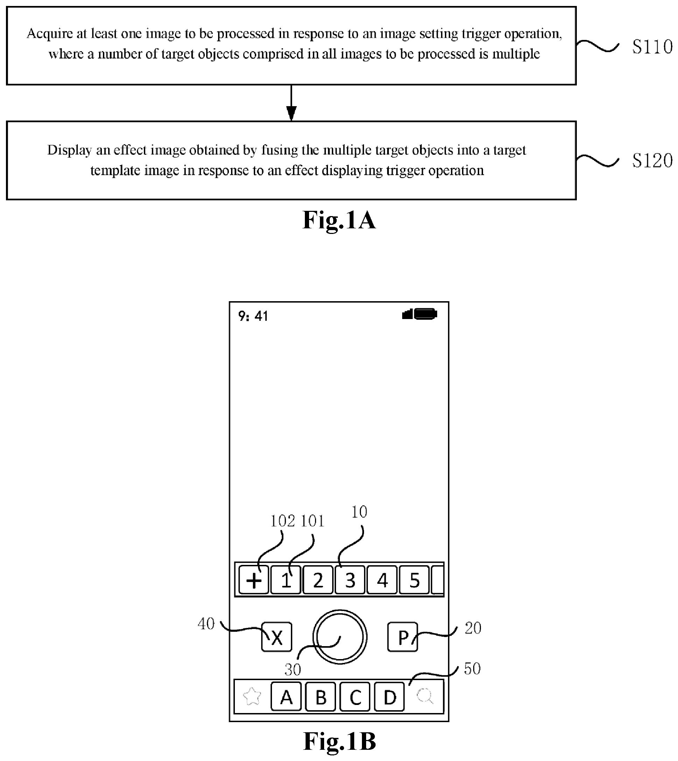

Fig. 1A is a schematic flowchart of an effect processing method according to embodiments of the present disclosure. The embodiments of the present disclosure are applicable to a case of deleting an object and restoring the object after deletion. The method may be performed by an effect processing apparatus, which may be implemented in the form of software and/or hardware, optionally, by an electronic device, which may be a mobile terminal, a PC or a server, etc.

As shown in Fig. 1A, the method of these embodiments may specifically include the following steps.

S110: at least one image to be processed is acquired in response to an image setting trigger operation, where a number of target objects included in all images to be processed is multiple.

The image setting trigger operation may be understood as a trigger operation used to set an image to be subjected to effect processing. Exemplarily, the image trigger operation may include an image shooting operation and/or an image uploading operation. The target object may be understood as an object in the image to be processed and used to generate an effect image.

In the embodiments of the present disclosure, acquiring at least one image to be processed in response to an image setting trigger operation may specifically include: displaying an image setting interface, where an image setting control is displayed in the image setting interface, and the image setting control may include an image shooting control and/or an image uploading control; and acquiring one or more set images as the at least one image to be processed in response to a control trigger operation acting on the image setting control. Exemplarily, a shot image is acquired as the image to be processed in response to a control trigger operation acting on the image shooting control. Alternatively, one or more uploaded images are acquired as the image to be processed in response to a control trigger operation acting on the image uploading control. In the technical solution, the setting manners of the image to be processed are enriched, and the differentiated effect processing requirements of the users may be better adapted, thereby diversifying the image content of the effect image.

Fig. 1B is a schematic diagram of an interaction interface (an image setting interface, which may also be called a shooting interface) that may be used for the effect processing method according to the embodiments of the present disclosure. As shown in Fig. 1B, an image uploading control 10 and an image uploading control 30 may be displayed in the image setting interface for the user to upload images. An image uploading button 102 and multiple image display positions 101 for previewing uploaded images may be provided in the image uploading control 10, and an image identification may be displayed in the image display position 101. One or more images may be uploaded as the image to be processed by triggering the image uploading button 102 and the image uploading control 30, and the image identification of the uploaded image is displayed in the image display position 101 for the user to view. An image shooting control 30 is also displayed in the image setting interface, and a shot image may be acquired in real time as the image to be processed by triggering the image shooting control 30. The related setting operation of the effect processing may also be cancelled through a deleting control 40. To be convenient for the user to select an effect, an effect display control 50 may also be displayed in the image setting interface. The effect may be quickly selected through the effect display control 50. An effect searching button and an effect favoriting button may also be provided in the effect display control 50. The effect to be used is searched for in a targeted manner through the effect searching button. One or more effects may be favorited through the effect favoriting button for subsequent reuse. In the technical solution, the image to be processed may be flexibly set through simple interaction operations, interaction functions are enriched, and the interaction experience is improved.

It should be noted that there may be one or more images to be processed set according to the image setting trigger operation. Since the image to be processed may be independently set through the interaction operation, the acquired images to be processed may be various. Each image to be processed may include no target object, or may include one or more target objects. In the embodiments of the present disclosure, the generation of the effect image requires the use of the target object in the image to be processed. To ensure the smooth generation of the effect image, after the at least one image to be processed is acquired, image eligibility detection may also be performed on the image to be processed based on a preset image detection condition, so as to avoid performance waste caused by processing an ineligible image to be processed.

Optionally, one or more target objects included in the image to be processed are extracted in a case where the image to be processed satisfies a preset image detection condition. The image detection condition may be understood as a condition used to detect whether the image to be processed meets a processing requirement. Exemplarily, the image detection condition includes at least one of the following conditions: the image to be processed includes a preset object, the image to be processed does not include preset content, or an image quality indicator of the image to be processed satisfies a preset indicator condition, etc. The image quality indicator may be understood as an indicator used to indicate the imaging quality of the image to be processed. For example, it may be image brightness and/or image clarity, etc.

Optionally, a manner of determining the target object included in the image to be processed includes: respectively determining, for each image to be processed, an image subject of a preset type; and in response to the image subject satisfying a preset object detection condition, determining the image subject as the target object. In the technical solution, the target object in the image to be processed may be accurately identified, and the display effect of the target object may be ensured.

The preset type may be understood as a preset type corresponding to image content. The object detection condition may be understood as a condition used to detect whether the image subject may be used as the target object. Exemplarily, the object detection condition includes at least one of the following conditions: a display size of the image subject reaches a preset size, a size proportion of the image subject in the image to be processed reaches a preset proportion, posture information of the image subject satisfies a preset posture restriction condition, or a completeness of the image subject reaches a preset completeness, etc.

The size proportion may include at least one of a width proportion, a height proportion or an area proportion. The posture information may include a posture angle, for example, specifically yaw (yaw angle), pitch (pitch angle) and roll (roll angle). Correspondingly, the posture restriction condition may be a preset angle range. The completeness of the image subject may be determined by identifying an outer contour of the image subject or comparing key information included in the image subject.

In the embodiments of the present disclosure, the target object may be an image subject of a preset type. Exemplarily, in a person image, a target sub-element may be a face or a hand in the image; in a landscape image, the target object may be a building or a plant of a preset type, etc.

S120: an effect image obtained by fusing the multiple target objects into a target template image is displayed in response to an effect displaying trigger operation.

The effect displaying trigger operation may be understood as a trigger operation used to request to display the effect image. The target template image may be understood as a base image corresponding to the multiple target objects. Specifically, a total number of fusion regions included in the target template image and used for fusing the target objects is greater than or equal to a total number of the target objects, so that the fusion effect of all target objects may be presented in the effect image. The fusion region may be understood as an image region in the target template image and used for fusing the target object. The fusion region may be a preset fixed region, or may be a region detected based on a preset region detection rule. Specifically, the fusion region may include a preset fusion region and/or a region in the target template image where image content of the same type as the target object is located, etc.

To enrich the effect display effect, an effect video may be used to display the effect image. As mentioned above, the embodiments of the present disclosure support the processing of the shot image and the uploaded image, therefore, the effect processing manners may be divided into two effect processing modes, namely, the camera mode and the upload mode, and then different effect display manners may be set for the two effect processing modes respectively.

Specifically, an effect processing mode is determined, and an effect video is generated based on the effect processing mode, where the effect processing mode includes a camera mode and an upload mode; and at least part of video content generated under the camera mode and the upload mode is different. In the technical solution, different effect effects may be presented for the images to be processed from different data sources, the effect presentation manners are enriched, and the effect processing experience is improved.

In the embodiments of the present disclosure, determining the effect processing mode specifically includes: determining the effect processing mode to be the upload mode in response at least one image being selected and the selected image including at least one target object; and determining the effect processing mode to be the camera mode in response to no image being selected or the selected image not including the target object.

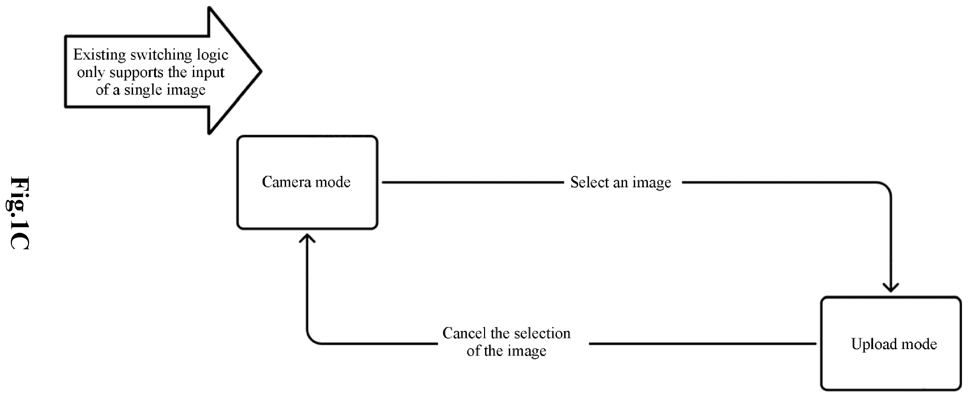

The existing switching logic between the camera mode and the upload mode often only supports the input of a single image to be processed, therefore, as shown in Fig. 1C, in the camera mode, if one image is selected, the mode is switched to the upload mode; if the selection of the image is cancelled, the mode is switched to the camera mode, but this manner is not well applicable to the scenario of multiple images to be processed.

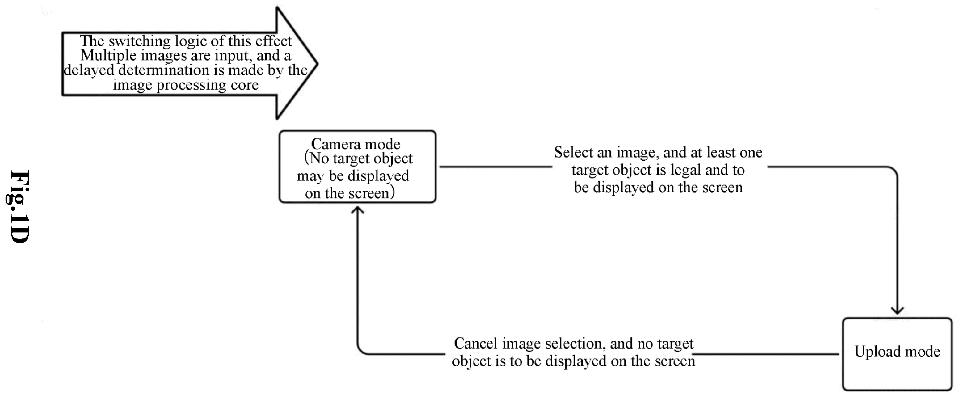

Therefore, the switching logic between the camera mode and the upload mode in the embodiments of the present disclosure needs to support the input of multiple images to be processed. As shown in Fig. 1D, multiple images to be processed may be input, and the images to be processed are processed by an image processing core one by one. The image processing core is used to extract the target object in the image to be processed. When processing multiple images to be processed, queuing and sequential processing are often required. In the camera mode, because a single image is fixed, the target object may not be displayed on the screen at this time. In a case where the user selects to upload an image and the selected image is legal, the mode is switched to the upload mode. Whether the image is legal may be determined by whether there is at least one target object in the selected image to be displayed on the screen. If yes, the mode is switched to the upload mode. In the upload mode, if it is detected that the image selection is cancelled, and there is no target object in all currently selected images to be displayed on the screen, the mode is switched to the camera mode.

Exemplarily, the effect video includes at least the image to be processed, the effect image obtained by fusing the multiple target objects into the target template image, and at least one intermediate image frame displayed between the image to be processed and the effect image. The intermediate image may include a transition image and/or a video frame displayed on the screen with the target object. There may be at least one different intermediate image frame in the camera mode and the upload mode.

Considering that in the upload mode, it is more convenient to process multiple images, at this time, the display of multiple target objects on the screen may be increased, so that the user may intuitively know the added target objects. Optionally, in a case where the image to be processed is an uploaded image, a first effect video may be displayed, where the first effect video includes the image to be processed, the target object displayed on the screen, a preset transition image, and the effect image obtained by fusing the multiple target objects into the target template image, which are displayed in sequence.

Optionally, in response to the image to be processed being a shooting image, a second effect video is displayed, where the second effect video includes the image to be processed, a preset transition image, and the effect image obtained by fusing the multiple target objects into the target template image, which are displayed in sequence.

When generating the effect video, a video generation mode to be adopted needs to be determined, and then the effect video is generated according to the video generation mode. In the camera mode, the video generation mode includes a shooting playback mode and a shooting recording mode. Similarly, in the upload mode, the video generation mode includes an image uploading playback mode and an image uploading recording mode.

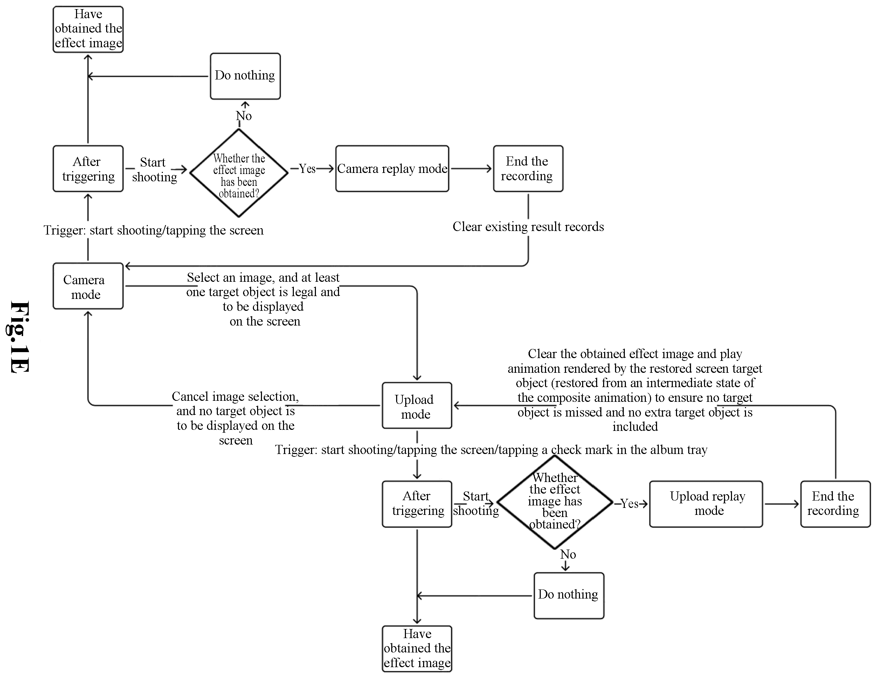

Specifically, in a case where a start recording message is received, the effect processing mode is the camera mode, and the effect image has been obtained, the video generation mode is determined as the shooting playback mode. In the shooting playback mode, both the image to be processed (the frame fixed by the shooting apparatus) and the effect image (returned by the server) are available, and the final effect video may be presented in a first preset manner. The first preset manner includes display time and screen display information and a change manner thereof, etc. Exemplarily, as shown in Fig. 1E, in the camera mode, the generation of the effect video is triggered by triggering the image shooting control or clicking the screen. After the triggering, the generation of the effect video is started. At this time, it is necessary to determine whether the effect image has been obtained, and if the effect image has been obtained, the shooting playback mode is used to generate the effect video. After the recording is finished, the effect editing interface is jumped to for the user to process the effect video (such as publishing or deleting, etc.). If the effect image has not been obtained, the shooting recording is continued in the camera mode.

Exemplarily, the first preset manner includes: displaying the image to be processed, displaying a progress bar on an upper layer of the image to be processed, playing the progress bar for a first preset duration, gradually disappearing by adjusting transparency, then playing a transition effect, displaying the effect image, and maintaining for a second preset duration. Further, it may also be fixed after being amplified by a preset multiple through an easing curve.

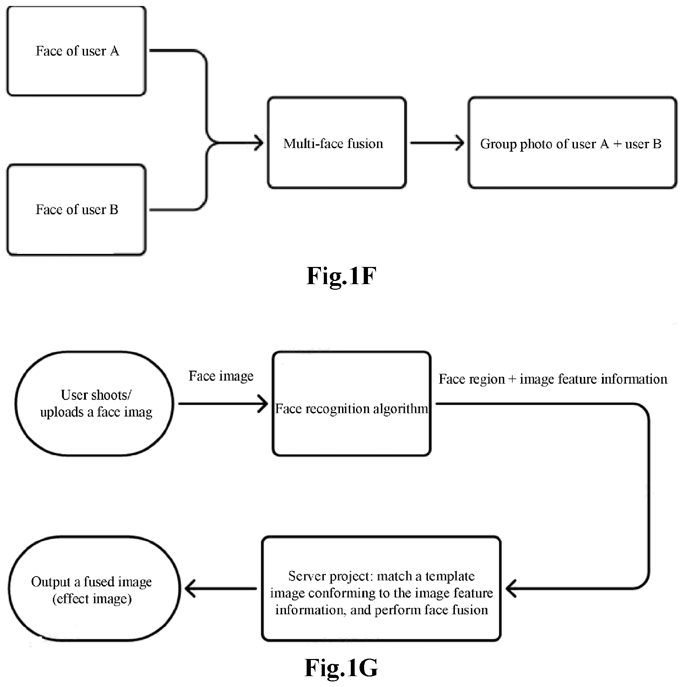

There are various manners to generate the effect image by using the obtained effect image. In the embodiments of the present disclosure, the effect image is generated by means of image fusion. Different from the manner of only processing a single target object in the related art, the fusion of multiple target objects may be realized. Taking the target object being a face image as an example, as shown in Fig. 1F, the target object may include a face of user A and a face of user B, and then a group photo of user A and user B may be obtained by means of multi-face fusion, which increases input parameters of the effect image, thereby enriching the image content of the effect image.

Before displaying the effect image, it is necessary to fuse the multiple target objects into the target template image to obtain the effect image. Considering that most of the effect application terminals are mobile terminals with relatively limited computing power and memory space, in order to save the performance of the effect application terminals, the target objects may be uploaded to a server, and the effect image may be generated by the server. Furthermore, the effect application terminal receives the effect image delivered by the server and displays the effect image. Certainly, if the computing power of the effect application terminal allows, the effect image may also be generated by the effect application terminal.

Specifically, generating the effect image may include: determining a target template image according to a total number of the target objects included in all images to be processed; and fusing the multiple target objects into the target template image to obtain the effect image, and displaying the effect image. Furthermore, the target template image may be determined from one or more preset candidate template images corresponding to the total number of the target objects. In the case where there are multiple candidate template images, in order to ensure the display effect of the effect image, image feature information may be determined based on object information of the multiple target objects, and then the target template image may be selected according to the image feature information.

Optionally, at least one preset template image matching a total number of the target objects is displayed, where a total number of fusion regions included in the preset template image and used for fusing the target objects is greater than or equal to the total number of the target objects; then, in response to a selection trigger operation for the preset template image, the selected preset template image is determined as the target template image. In the technical solution, the custom setting of the target template image is supported, so that the determined target template image may better fit the differentiated requirements of the users.

Furthermore, displaying the at least one preset template image matching the total number of the target objects may specifically include: determining, according to the total number of the target objects included in all images to be processed, at least one preset template image matching the total number of the target objects from preset template images stored in a target image library, and displaying the preset template image. Specifically, the total number of the target objects included in all images to be processed may be determined by: determining target objects included in each image to be processed separately, and then determining the total number of the target objects included in all images to be processed.

After the target template image is determined, the multiple target objects may be fused into the target template image to obtain the effect image, and the effect image is displayed.

For ease of understanding, the effect processing procedure will now be exemplarily described in conjunction with the optional example in Fig. 1G. As shown in Fig. 1G, after the user shoots or uploads a face image (an image including a face region) at the effect application terminal, the face image is processed by a face recognition algorithm to obtain a target object (a face region) and image feature information. Then, the face region and the image feature information are transmitted to a server project, and the server project matches a template image conforming to the image feature information to obtain a target template image, and then fuses the face region into the target template image to obtain a fused image. Then, the fused image is output as an effect image to the effect application terminal.

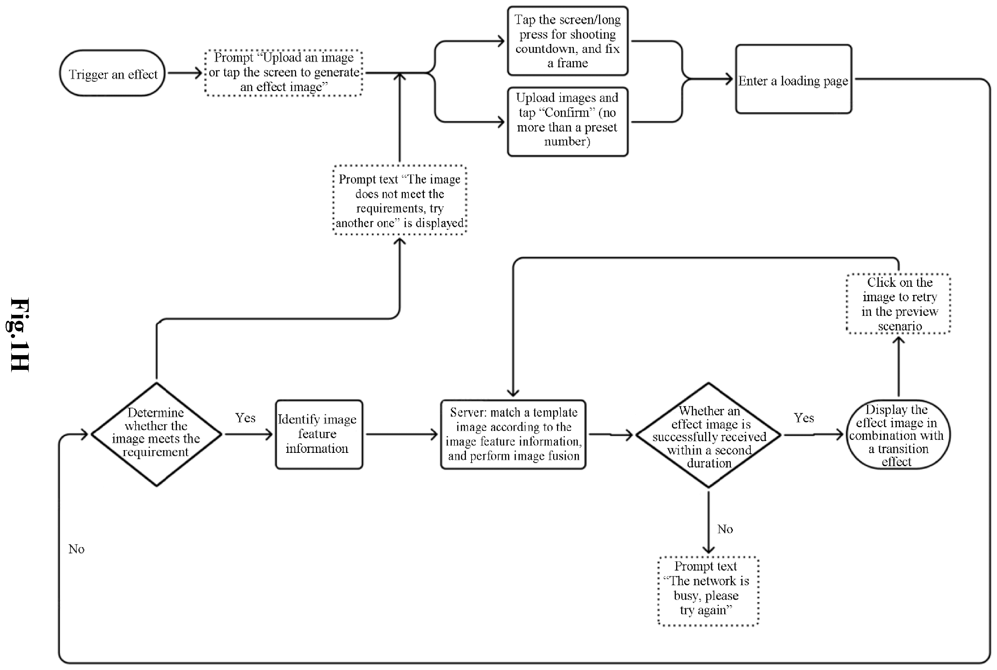

As an optional example of the effect processing method based on the embodiments of the present disclosure, as shown in Fig. 1H, after receiving an enabling trigger operation for a target effect, an album tray is invoked and an operation prompt text is displayed, such as "Upload images or tap the screen to generate a photo - support up to 6 people". When receiving a trigger operation of tapping the screen or long pressing for recording or tapping for shooting, or uploading no more than a preset number of images and tapping "Confirm", a frame is fixed and then a loading page (i.e., a loading page) is automatically entered. Then an image review process is entered to determine whether the image meets requirements (having a target object and no preset content prohibited to be adopted). If the image meets the requirements, the image is identified to obtain the target object and image feature information, which are then sent to the server. If the image does not meet the requirements, a pop-up window text appears, such as "The image does not meet the requirements, try uploading another one", and after being displayed for a first duration (such as two seconds), it disappears and an initial text is switched to. If there is a compliant image in the selected images, an image uploading screen display state is switched to. The server presets multiple template images, and marks target fusion positions and image feature information in each template image. The server retrieves a model image conforming to the image feature information according to the received data of the target object and the image feature information, performs the fusion of multiple target objects to generate an effect image, and if the effect image is generated successfully within a second duration and the effect image is successfully returned to a requesting end, the effect image is displayed in combination with a transition effect. If the effect image is not generated successfully within the second duration, or the requesting end does not receive the effect image, a processing state prompt text is displayed, such as "The network is busy, please try again". In addition, a retry prompt text may also be displayed in the preview scenario, such as "Tap to shoot to save the effect". If a retry request is received, the server is requested to re-execute the operation of generating the effect image.

In the technical solution of the embodiments of the present disclosure, by acquiring at least one image to be processed in response to an image setting trigger operation, custom setting of the image to be processed is supported, and multiple target objects in one or more images to be processed enrich generation materials of the effect image, and more custom fusion contents are supported. By displaying an effect image obtained by fusing the multiple target objects into a target template image in response to an effect displaying trigger operation, technical problems in the related art that a display effect of the effect image is monotonous and lacks interest are solved, interaction manners of effect processing and display effects of the effect image are enriched, and the effect processing experience is improved.

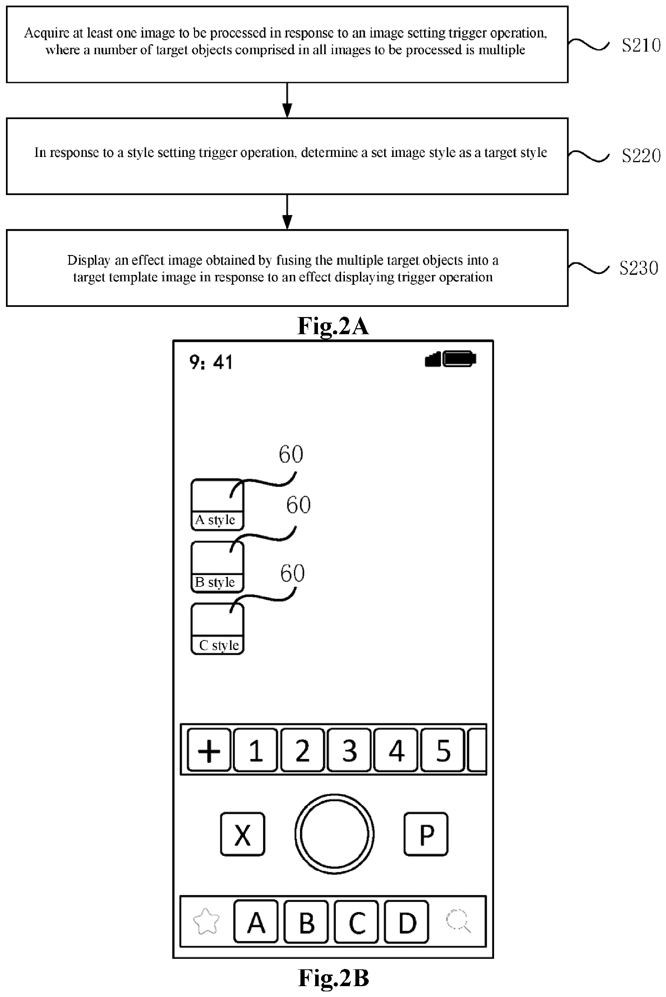

Fig. 2 is a schematic flowchart of another effect processing method according to embodiments of the present disclosure. On the basis of the above embodiments, the technical solution of these embodiments add the setting of the style of the effect image. Optionally, before the responding to an effect trigger operation, the method further includes: in response to a style setting trigger operation, determining a set image style as a target style; displaying an effect image obtained by fusing the multiple target objects into a target template image includes: displaying the effect image obtained by fusing the multiple target objects into the target template image of the target style. For the specific implementation, reference may be made to the description of this embodiment. The technical features the same as or similar to those in the previous embodiments will not be repeated here. As shown in Fig. 2, the method of these embodiments may specifically include the following steps.

S210: at least one image to be processed is acquired in response to an image setting trigger operation, where a number of target objects included in all images to be processed is multiple.

S220: in response to a style setting trigger operation, a set image style is determined as a target style.

The style setting trigger operation may be understood as a trigger operation used to set an image style expected to be presented by the generated effect image. Exemplarily, one or more style setting controls are displayed; and an image style that is set is determined in response to a control trigger operation for the style setting control. Optionally, each style setting control corresponds to a preset image style. Specifically, a style setting control corresponding to one or more image styles is displayed; and in response to a selection trigger operation for the style setting control, an image style corresponding to the selected style setting control is taken as the target style. Alternatively, the style setting control may also be a style switching control, and one style setting control may correspond to multiple image styles. In response to the control trigger operation for the style setting control, the selected image style is switched. Exemplarily, the image style may be set according to actual requirements, for example, it may include at least one of Chinese style, blockbuster style, or interesting style, and the image style to be adopted is not limited here.

Fig. 2B is a schematic diagram of another interaction interface that may be used for the effect processing method according to the embodiments of the present disclosure. As shown in Fig. 2B, multiple style setting controls 60 may be displayed in the interaction interface. Each style setting control 60 may correspond to an image style. Specifically, in response to a selection trigger operation for the style setting control 60, an image style corresponding to the selected style setting control 60 is taken as the target style. To be convenient for the user to know the operation state, the selected style setting control 60 and the unselected style setting control 60 may be displayed distinctively. For example, the selected style setting control 60 is highlighted in at least one of the following manners: changing the display color, changing the display size, or adding a selection identification.

S230: an effect image obtained by fusing the multiple target objects into a target template image of the target style is displayed in response to an effect displaying trigger operation.

In the embodiments of the present disclosure, optionally, one or more target image libraries are set for each image style respectively, which are used to store one or more images matching the image style, so as to realize the precise matching of the candidate template image first. Furthermore, an image in a target image library corresponding to the image style that is set is taken as a candidate template image corresponding to the image to be processed; and the target template image is determined from the candidate template image according to the total number of the target objects in all images to be processed.

It should be noted that the operation timing of the style setting operation may be set according to actual requirements, for example, before the image to be processed is acquired, after the image to be processed is acquired, before the effect image is displayed, or after the effect image is displayed, etc. However, in the case where the image style that is set changes, the effect image also changes accordingly. That is, in response to a style switching trigger operation, an effect image corresponding to the switched image style is displayed.

In the technical solution of the embodiments of the present disclosure, by taking an image style that is set as a target style in response to a style setting trigger operation, the flexible setting of the image style of the effect image may be realized, the interaction manners are enriched, and input parameters of the effect processing are increased, so that the input parameters of the effect processing are more enriched, and the presentation effect of the effect image is guided. Furthermore, by displaying an effect image obtained by fusing the multiple target objects into a target template image of the target style in response to an effect displaying trigger operation, the display effect of the effect image presenting the target style may be accurately realized through the style setting trigger operation, the fine processing of the effect is realized, and the presentation effect of the effect image is improved.

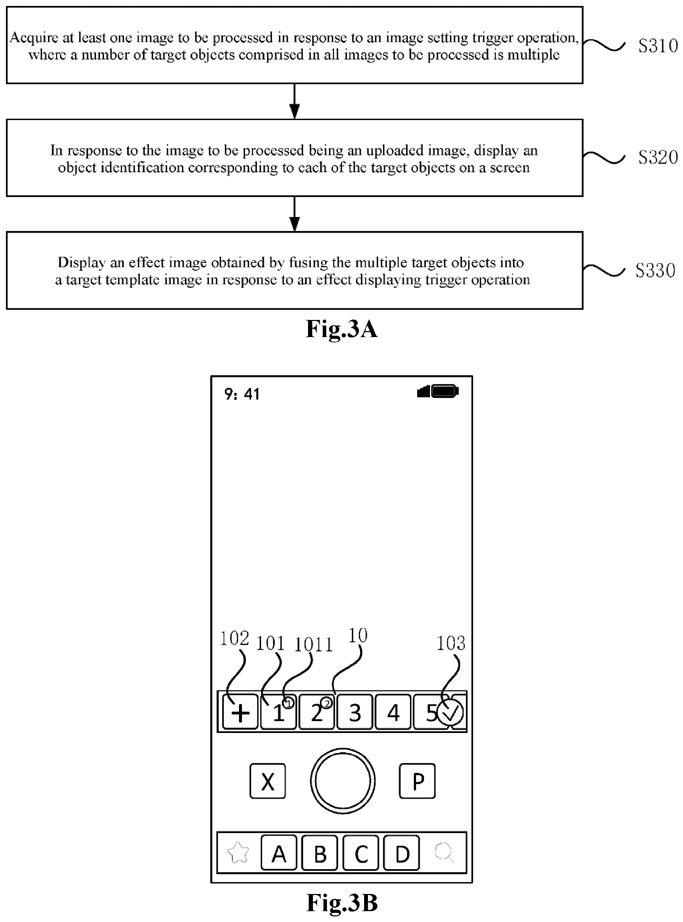

Fig. 3A is a schematic flowchart of another effect processing method according to embodiments of the present disclosure. On the basis of the above embodiments, the technical solution of these embodiments add the technical feature of displaying the target object of the uploaded image on a screen. Optionally, after the at least one image to be processed is acquired and before the effect image obtained by fusing the multiple target objects into the target template image is displayed, the method further includes: in a case where the image to be processed is an uploaded image, displaying each of the target objects on a screen separately. For the specific implementation, reference may be made to the description of this embodiment. The technical features the same as or similar to those in the previous embodiments will not be repeated here. As shown in Fig. 3A, the method of these embodiments may specifically include the following steps.

S310: at least one image to be processed is acquired in response to an image setting trigger operation, where a number of target objects included in all images to be processed is multiple.

As mentioned above, the image to be processed may be a shot image or an uploaded image. In the case where the image to be processed is an uploaded image, in order to be convenient for the user to view the selected image, as shown in Fig. 3B, a selection identification 1011 may be added to the image 1 corresponding to the selected image display position 101. Specifically, the selection identification 1011 may also be used to indicate the selection order of the image. The image may be processed subsequently according to the selection order of the image. For example, the target object corresponding to the image may be displayed on the screen according to the selection order of the image. After all images to be uploaded are selected, a subsequent processing for the selected images may be triggered by triggering an image confirmation button 103 displayed in the image uploading control. It may be understood that the selected image is the image to be processed. The image confirmation button 103 is used to determine that the input of the image to be processed has been completed. In the embodiments of the present disclosure, the image confirmation button 103 may be displayed when there is a selected image, so as not to cover the image identification displayed in the image display position 101 in the image uploading control 10.

S320: in response to the image to be processed being an uploaded image, each of the target objects is displayed on a screen respectively.

As mentioned above, the image to be processed is an uploaded image and the object to be processed includes multiple target objects. In this case, the effect processing mode is the upload mode, which may be different from the camera mode, and the target objects included in the uploaded image to be processed are displayed on the screen. It may be understood that there may be one or more target objects to be displayed on the screen. Each of the target objects is displayed on the screen separately. To ensure the display effect of multiple target objects on the screen, display information of the multiple target objects may be dynamically adjusted according to a total number of target objects displayed on the screen. In other words, the display information of the multiple target objects may be determined according to the total number of target objects displayed on the screen. Then, the target object is displayed on the screen according to the display information of each of the target objects.

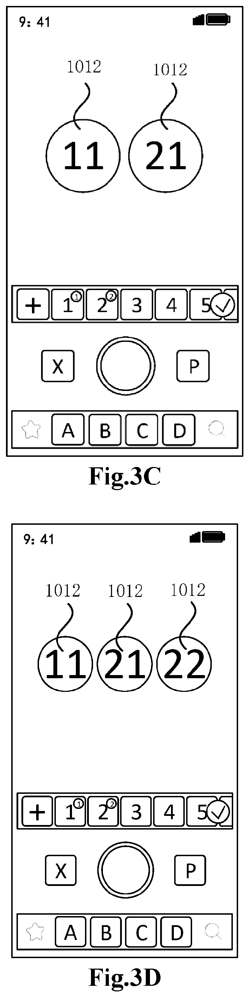

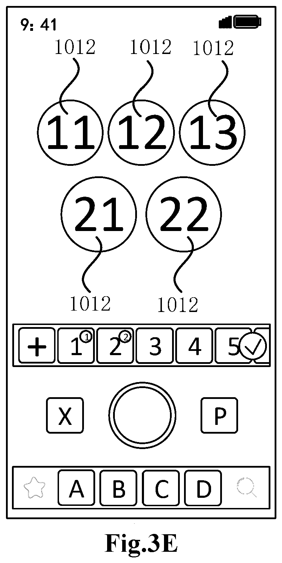

For ease of understanding, examples of displaying two, three, and five target objects 1012 on the screen in the effect processing method that may be used for the embodiments of the present disclosure are shown in FIGS. 3C, 3D, and 3E, respectively, according to the embodiments of the present disclosure. It should be noted that the layouts in the figure are only examples of display manners of the target object 1012 of the target object, and are not limitations on the display manners. As shown in FIGS. 3C, 3D, and 3E, the target objects 1012 of the selected images to be processed 1 and 2 may be displayed on the screen. For the selected image to be processed 1, the corresponding target object 1012 may include only 11, or may include 11, 12, and 13. Similarly, for the selected image to be processed 2, the corresponding target object 1012 may include only 21, or may include 21 and 22. A manner of displaying multiple target objects 1012 on the screen may be center display. To ensure the display effect of multiple target objects 1012 on the screen, the display information of the target objects 1012 may be dynamically adjusted according to the total number of target objects 1012 displayed on the screen.

Considering that in actual application, the image to be processed may be changed, for example, adding an image, canceling the selection of an image, and deleting an image, etc. Optionally, after each of the target objects is displayed on the screen separately, the method further includes: in response to an editing trigger operation for the image to be processed, updating screen display information of the target object according to the edited image to be processed.

The editing trigger operation includes at least one of an image adding operation, an image deleting operation, or an image cropping operation. The screen display information of the target object may be understood as display information of the target object on the screen, for example, it may include one or more of display information such as a display position, a display track, a display size, a display color, and transparency of the target object on the screen.

By adopting the technical solution, the flexible editing of the image to be processed may be realized, and the display effect of the target object on the screen may be changed with the change of the image to be processed, so as to ensure that the target object displayed on the screen is consistent with the image to be processed that is actually adopted.

S330: an effect image obtained by fusing the multiple target objects into a target template image is displayed in response to an effect displaying trigger operation.

As mentioned above, in response to the image to be processed being an uploaded image, the first effect video is displayed. The first effect video includes the image to be processed, the target object displayed on the screen, a preset transition image, and the effect image obtained by fusing the multiple target objects into the target template image, which are displayed in sequence.

Continuing with Fig. 1E, as shown in Fig. 1E, the image to be processed is an uploaded image, that is, in the upload mode. At this time, the generation of the effect video is triggered by triggering a preset image selection confirmation control in the image uploading control. After the triggering, the generation of the effect video is started. At this time, it is necessary to determine whether the effect image has been obtained, and if the effect image has been obtained, the image uploading playback mode is used to generate the effect video. In addition, after the recording is finished, the effect editing interface is jumped to for the user to process the effect video (for example, publish the effect video, delete the effect video, or return to the image setting interface, etc.). If the effect image has not been obtained, the shooting recording is continued in the image uploading recording mode.

As an optional implementation of the embodiments of the present disclosure, in the image uploading recording mode and the image uploading playback mode, the display effects of the multiple target objects displayed on the screen may be different. For example, in the image uploading recording mode, the target objects displayed on the screen may present an effect of gathering from the display positions when being rendered on the screen to the center of the screen. In the image uploading playback mode, the target objects displayed on the screen may present an effect of moving from the center of the screen to the display positions when being rendered on the screen.

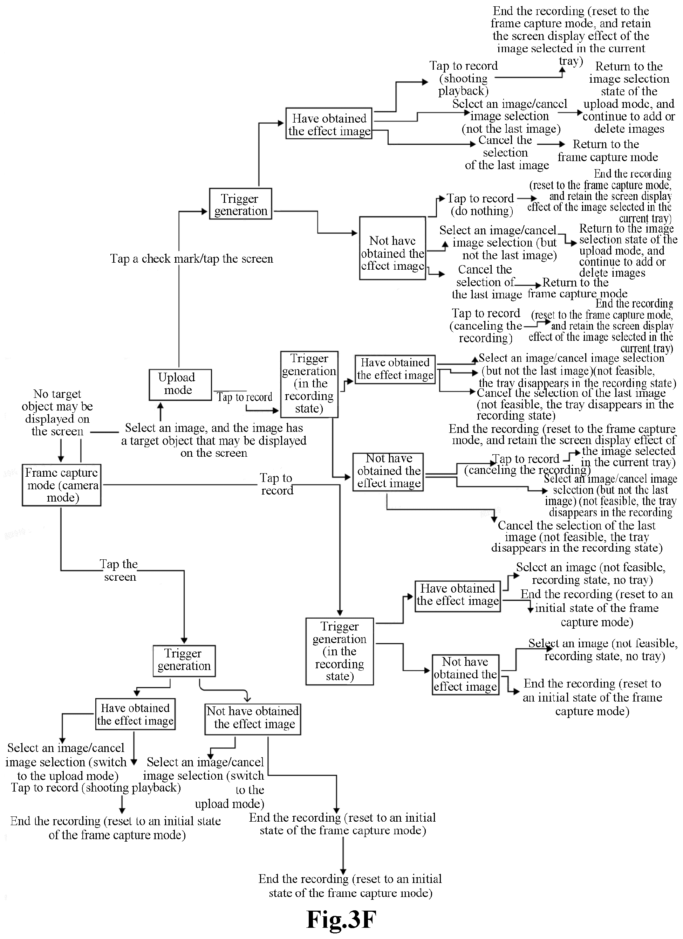

Fig. 3F is a schematic flowchart of another optional example implemented based on the effect processing method according to the embodiments of the present disclosure. As shown in Fig. 3F, in the effect processing process, different response logic is set for image setting operations to ensure the smooth generation of the effect image. In the upload mode, if an image trigger generation operation (a trigger operation for completing image selection or an operation of tapping the screen, etc.) is received, after the recording is finished, a frame capture mode is reset to and the screen display effect of the image selected in a current tray (in the image uploading control) is retained; if an image selection operation or an operation of canceling image selection is received and the operated image is not the last image, an image selection state of the upload mode is returned to and images continue to be added or deleted; if the operation of canceling the selection of the last image is received, the frame capture mode, i.e., the camera mode, is returned to. If a recording trigger operation is received, at this time, after the recording is finished, the frame capture mode is reset to and the screen display effect of the image selected in the current tray (in the image uploading control) is retained; the tray disappears in the recording state, and the image selection operation or the operation of canceling image selection is not supported. The same parts as the previous example will not be repeated, reference may be made to the previous example.

In the technical solution of the embodiments of the present disclosure, in the case where the image to be processed is an uploaded image, each of the target objects is displayed on the screen separately, so that the user may intuitively view the target objects to be fused into the target template image through the screen display, so as to adjust the object to be processed to adjust the target objects, and intermediate information in the effect processing process may be displayed, the effect interaction forms are enriched, and the effect processing experience is improved.

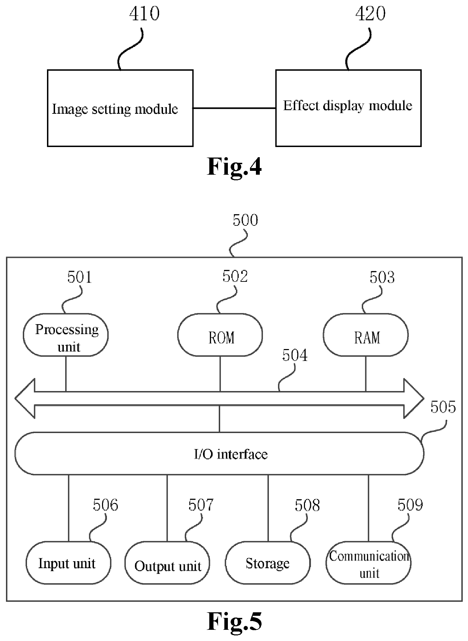

Fig. 4 is a schematic diagram of a structure of an effect processing apparatus according to embodiments of the present disclosure. As shown in Fig. 4, the apparatus includes an image setting module 410 and an effect display module 420. The image setting module 410 is configured to acquire at least one image to be processed in response to an image setting trigger operation, where a number of target objects included in all images to be processed is multiple; and the effect display module 420 is configured to display an effect image obtained by fusing the multiple target objects into a target template image in response to an effect displaying trigger operation.

In the technical solution of the embodiments of the present disclosure, the image setting module acquires at least one image to be processed in response to an image setting trigger operation, custom setting of the image to be processed is supported, and multiple target objects in one or more images to be processed enrich generation materials of the effect image, and more custom fusion contents are supported. The effect display module displays an effect image obtained by fusing the multiple target objects into a target template image in response to an effect displaying trigger operation, technical problems in the related art that a display effect of the effect image is monotonous and lacks interest are solved, interaction manners of effect processing and display effects of the effect image are enriched, and the effect processing experience is improved.

On the basis of any optional technical solution of the embodiments of the present disclosure, optionally, the effect processing apparatus further includes a style setting module. The style setting module is configured to, before the responding to the effect trigger operation, in response to a style setting trigger operation, and determine a set image style as a target style; and the effect display module 420 is further configured to display the effect image obtained by fusing the multiple target objects into a target template image of the target style.

On the basis of any optional technical solution of the embodiments of the present disclosure, optionally, the effect processing apparatus further includes a screen display module. The screen display module is configured to, after the at least one image to be processed is acquired and before the effect image obtained by fusing the multiple target objects into the target template image is displayed, in response to the image to be processed being an uploaded image, display each of the target objects on a screen respectively.

On the basis of any optional technical solution of the embodiments of the present disclosure, optionally, the effect processing apparatus further includes a screen display update module. The screen display update module is configured to, after each of the target objects on the screen is displayed respectively, in response to an editing trigger operation for the image to be processed, updating screen display information of the target objects according to the edited image to be processed, where the editing trigger operation includes at least one of an image adding operation, an image deleting operation, or an image cropping operation.

On the basis of any optional technical solution of the embodiments of the present disclosure, optionally, the effect display module 420 is configured to, in response to the image to be processed being an uploaded image, display a first effect video, where the first effect video includes the image to be processed, the target objects displayed on the screen, a preset transition image, and the effect image obtained by fusing the multiple target objects into the target template image, which are displayed in sequence.

On the basis of any optional technical solution of the embodiments of the present disclosure, optionally, the effect processing apparatus further includes an image detection module. The image detection module is configured to, after the at least one image to be processed is acquired and before the effect image obtained by fusing the multiple target objects into the target template image is displayed, in response to the image to be processed satisfies a preset image detection condition, extract one or more target objects included in the image to be processed, where the image detection condition includes at least one of: the image to be processed including a preset object, the image to be processed not including preset content, or an image quality indicator of the image to be processed satisfying a preset indicator condition.

On the basis of any optional technical solution of the embodiments of the present disclosure, optionally, the effect processing apparatus further includes the effect display module 420, which is further configured to respectively determine, for each image to be processed, an image subject of a preset type; and in response to the image subject satisfying a preset object detection condition, determine the image subject as the target object, where the object detection condition includes at least one of: a display size of the image subject reaching a preset size, a size proportion of the image subject in the image to be processed reaching a preset proportion, posture information of the image subject satisfying a preset posture restriction condition, or a completeness of the image subject reaching a preset completeness.

On the basis of any optional technical solution of the embodiments of the present disclosure, optionally, the effect processing apparatus further includes the effect display module 420, which is further configured to, in response to the image to be processed being a shooting image, displaying a second effect video, where the second effect video includes the image to be processed, a preset transition image, and the effect image obtained by fusing the multiple target objects into the target template image, which are displayed in sequence.

On the basis of any optional technical solution of the embodiments of the present disclosure, optionally, the effect processing apparatus further includes a template display module and a template selection module. The template display module is configured to, before the effect image obtained by fusing the multiple target objects into the target template image is displayed, display at least one preset template image matching a total number of the target objects, where a total number of fusion regions included in the preset template image and used for fusing the target objects is greater than or equal to the total number of the target objects; and in response to a selection trigger operation for the preset template image, determine a selected preset template image as the target template image.

On the basis of any optional technical solution of the embodiments of the present disclosure, optionally, the effect display module 420 is further configured to determine an effect processing mode, and generating an effect video based on the effect processing mode, where the effect processing mode includes a camera mode and an upload mode; and at least part of video content generated under the camera mode and the upload mode is different.

On the basis of any optional technical solution of the embodiments of the present disclosure, optionally, the effect display module 420 is further configured to determine the effect processing mode to be the upload mode in response at least one image being selected and the selected image including at least one target object; and determine the effect processing mode to be the camera mode in response to no image being selected or the selected image not including the target object.

On the basis of any optional technical solution of the embodiments of the present disclosure, optionally, a total number of fusion regions included in the target template image and used for fusing the target objects is greater than or equal to a total number of the target objects; and the fusion regions include preset fusion regions and/or regions of the target template image including image content of a same type as the target objects.

The effect processing apparatus provided by the embodiments of the present disclosure may execute the effect processing method provided by any embodiment of the present disclosure, and has corresponding functional modules and beneficial effects for executing the effect processing method.

It is worth noting that the various units and modules included in the above apparatus are only divided according to functional logic, but are not limited to the above division, as long as the corresponding functions may be realized. In addition, the specific names of the functional units are only for the convenience of distinguishing from each other, and are not used to limit the protection scope of the embodiments of the present disclosure.

Fig. 5 is a schematic diagram of a structure of an electronic device according to embodiments of the present disclosure. Reference is made to Fig. 5 below, which illustrates a schematic diagram of a structure of an electronic device 500 (such as a terminal device or a server in Fig. 5) suitable for implementing embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer, a portable media player (PMP), a vehicle-mounted terminal (such as a vehicle navigation terminal), etc., and fixed terminals such as a digital TV, a desktop computer, etc. The electronic device shown in Fig. 5 is only an example, and should not cause any limitation on the function and scope of use of the embodiments of the present disclosure.

As shown in Fig. 5, the electronic device 500 may include a processing unit 501 (such as a central processing unit, a graphics processor, etc.), which may perform various appropriate actions and processing according to a program stored in a read-only memory (ROM) 502 or a program loaded from a storage 508 into a random access memory (RAM) 503. The RAM 503 also stores various programs and data required for the operation of the electronic device 500. The processing unit 501, the ROM 502, and the RAM 503 are connected to each other through a bus 504. An editing/output (I/O) interface 505 is also connected to the bus 504.

Usually, the following apparatuses may be connected to the I/O interface 505: an input unit 506 including, for example, a touch screen, a touchpad, a keyboard, a mouse, a camera, a microphone, an accelerometer, a gyroscope, etc.; an output unit 507 including, for example, a liquid crystal display (LCD), a speaker, a vibrator, etc.; a storage 508 including, for example, a magnetic tape, a hard disk, etc.; and a communication unit 509. The communication unit 509 may allow the electronic device 500 to perform wireless or wired communication with other devices to exchange data. Although Fig. 5 shows the electronic device 500 having various apparatuses, it should be understood that it is not required to implement or have all the apparatuses shown. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program code for executing the method shown in the flowchart. In such an embodiment, the computer program may be downloaded from a network and installed through the communication unit 509, or installed from the storage 508, or installed from the ROM 502. When the computer program is executed by the processing unit 501, the above-mentioned functions defined in the method of the embodiments of the present disclosure are executed.

The names of messages or information exchanged between multiple apparatuses in the implementations of the present disclosure are for illustrative purposes only, and are not intended to limit the scope of these messages or information.

The electronic device provided by the embodiments of the present disclosure belongs to the same inventive concept as the effect processing method provided by the above embodiments. For the technical details not described in detail in this embodiment, reference may be made to the above embodiments, and these embodiments have the same beneficial effects as the above embodiments.

Embodiments of the present disclosure provide a computer storage medium having a computer program stored thereon, and when the program is executed by a processor, the effect processing method provided by the above embodiments is implemented.

It should be noted that the above computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, which may be used by or in combination with an instruction execution system, apparatus, or device. In the present disclosure, a computer-readable signal medium may include a data signal propagated in a baseband or as a part of a carrier wave, and computer-readable program code is carried therein. This propagated data signal may take many forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted by any suitable medium, including but not limited to: a wire, an optical cable, a radio frequency (RF), etc., or any suitable combination of the above.

In some implementations, clients and servers may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device; or it may exist alone without being assembled into the electronic device.

The above computer-readable medium carries one or more programs that, when executed by the electronic device, cause the electronic device to: acquire at least one image to be processed in response to an image setting trigger operation, where a number of target objects included in all images to be processed is multiple; and display an effect image obtained by fusing the multiple target objects into a target template image in response to an effect displaying trigger operation.

The computer program code for performing the operations of the present disclosure may be written in one or more programming languages or a combination thereof, where the above programming languages include, but are not limited to, an object-oriented programming language such as Java, Smalltalk, C++, and also include conventional procedural programming languages such as "C" language or similar programming languages. The program code may be executed entirely on a user's computer, partly on a user's computer, as a stand-alone software package, partly on a user's computer and partly on a remote computer, or entirely on a remote computer or server. In the case of involving the remote computer, the remote computer may be connected to the user's computer through any kind of network, including a local area network (LAN) or a wide area network (WAN), or may be connected to an external computer (for example, connected through the Internet with the aid of an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of a unit does not constitute a limitation on the unit itself under certain circumstances, for example, the first acquisition unit may also be described as "a unit for acquiring at least two internet protocol addresses".

The functions described above may be performed at least partly by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include but be not limited to an electronic, magnetic, optical, electromagnetic, infrared, or semiconductor system, apparatus or device, or any suitable combination of the above. More specific examples of the machine-readable storage medium may include an electrical connection based on one or more lines, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, [Example 1] provides an effect processing method, including: acquiring at least one image to be processed in response to an image setting trigger operation, where a number of target objects included in all images to be processed is multiple; and displaying an effect image obtained by fusing the multiple target objects into a target template image in response to an effect displaying trigger operation.

According to one or more embodiments of the present disclosure, [Example 2] provides the method of Example 1, further including: optionally, before the responding to an effect trigger operation, the method further includes: in response to a style setting trigger operation, determining a set image style as a target style; and the displaying the effect image obtained by fusing the multiple target objects into the target template image includes: displaying the effect image obtained by fusing the multiple target objects into the target template image of the target style.

According to one or more embodiments of the present disclosure, [Example 3] provides the method of Example 1, further including: optionally, after the at least one image to be processed is acquired and before the effect image obtained by fusing the multiple target objects into the target template image is displayed, the method further includes: in response to the image to be processed being an uploaded image, displaying each of the target objects on a screen respectively.

According to one or more embodiments of the present disclosure, [Example 4] provides the method of Example 3, further including: optionally, after displaying each of the target objects on the screen respectively, the method further includes: in response to an editing trigger operation for the image to be processed, updating screen display information of the target objects according to the edited image to be processed, where the editing trigger operation includes at least one of an image adding operation, an image deleting operation, or an image cropping operation.

According to one or more embodiments of the present disclosure, [Example 5] provides the method of Example 3, further including: optionally, displaying the effect image obtained by fusing the multiple target objects into the target template image includes: in response to the image to be processed being an uploaded image, displaying a first effect video, where the first effect video includes the image to be processed, the target objects displayed on the screen, a preset transition image, and the effect image obtained by fusing the multiple target objects into the target template image, which are displayed in sequence.

According to one or more embodiments of the present disclosure, [Example 6] provides the method of Example 1, further including: optionally, after acquiring the at least one image to be processed and before displaying the effect image obtained by fusing the multiple target objects into the target template image, the method further includes: in response to the image to be processed satisfies a preset image detection condition, extracting one or more target objects included in the image to be processed, where the image detection condition includes at least one of: the image to be processed including a preset object, the image to be processed not including preset content, or an image quality indicator of the image to be processed satisfying a preset indicator condition.

According to one or more embodiments of the present disclosure, [Example 7] provides the method of Example 3, further including: optionally, after acquiring the at least one image to be processed and before displaying the effect image obtained by fusing the multiple target objects into the target template image, the method further includes: respectively determining, for each image to be processed, an image subject of a preset type; and in response to the image subject satisfying a preset object detection condition, determining the image subject as the target object, where the object detection condition includes at least one of: a display size of the image subject reaching a preset size, a size proportion of the image subject in the image to be processed reaching a preset proportion, posture information of the image subject satisfying a preset posture restriction condition, or a completeness of the image subject reaching a preset completeness..

According to one or more embodiments of the present disclosure, [Example 8] provides the method of Example 1, further including: optionally, displaying the effect image obtained by fusing the multiple target objects into the target template image includes: in response to the image to be processed being a shooting image, displaying a second effect video, where the second effect video includes the image to be processed, a preset transition image, and the effect image obtained by fusing the multiple target objects into the target template image, which are displayed in sequence.

According to one or more embodiments of the present disclosure, [Example 9] provides the method of Example 1, further including: optionally, before displaying the effect image obtained by fusing the multiple target objects into the target template image, the method further includes: displaying at least one preset template image matching a total number of the target objects, where a total number of fusion regions included in the preset template image and used for fusing the target objects is greater than or equal to the total number of the target objects; and in response to a selection trigger operation for the preset template image, determining a selected preset template image as the target template image.

According to one or more embodiments of the present disclosure, [Example 10] provides the method of Example 1, further including: optionally, displaying the effect image obtained by fusing the multiple target objects into the target template image includes: determining an effect processing mode, and generating an effect video based on the effect processing mode, where the effect processing mode includes a camera mode and an upload mode; and at least part of video content generated under the camera mode and the upload mode is different.

According to one or more embodiments of the present disclosure, [Example 11] provides the method of Example 10, further including: optionally, determining the effect processing mode includes: determining the effect processing mode to be the upload mode in response at least one image being selected and the selected image including at least one target object; and determining the effect processing mode to be the camera mode in response to no image being selected or the selected image not including the target object.

According to one or more embodiments of the present disclosure, [Example 12] provides the method of Example 1, further including: optionally, a total number of fusion regions included in the target template image and used for fusing the target objects is greater than or equal to a total number of the target objects; and the fusion regions include preset fusion regions and/or regions of the target template image including image content of a same type as the target objects.

According to one or more embodiments of the present disclosure, [Example 13] provides an effect processing apparatus, including: an image setting module, configured to acquire at least one image to be processed in response to an image setting trigger operation, where a number of target objects included in all images to be processed is multiple; and an effect display module, configured to display an effect image obtained by fusing the multiple target objects into a target template image in response to an effect displaying trigger operation.

The above description is only preferred embodiments of the present disclosure and an explanation of the applied technical principles. Those skilled in the art should understand that the disclosure scope involved in the present disclosure is not limited to the technical solutions formed by the specific combination of the above technical features, and should also cover other technical solutions formed by any combination of the above technical features or their equivalent features without departing from the above disclosure concept. For example, the above features and the technical features with similar functions disclosed in the present disclosure (but not limited to) may be replaced each other to form a technical solution.

In addition, although the various operations are depicted in a particular order, this should not be understood as requiring the operations to be performed in the particular order shown or in a sequential order. Under certain circumstances, multitasking and parallel processing may be advantageous. Likewise, although the above discussion contains a number of specific implementation details, these should not be construed as limiting the scope of the present disclosure. Certain features described in the context of separate embodiments may also be implemented in a single embodiment in combination. Conversely, various features described in the context of a single embodiment may also be implemented in multiple embodiments individually or in any suitable subcombination.

Although the subject matter has been described in language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. An effect processing method, comprising:
acquiring at least one image to be processed in response to an image setting trigger operation, wherein a number of target objects comprised in all images to be processed is multiple; and
displaying an effect image obtained by fusing the multiple target objects into a target template image in response to an effect displaying trigger operation.

2. The effect processing method of claim 1, wherein before responding to the effect displaying trigger operation, the method further comprises:
in response to a style setting trigger operation, determining a set image style as a target style; and
displaying the effect image obtained by fusing the multiple target objects into the target template image comprises:
displaying the effect image obtained by fusing the multiple target objects into the target template image of the target style.

3. The effect processing method of claim 1, wherein after acquiring the at least one image to be processed and before displaying the effect image obtained by fusing the multiple target objects into the target template image, the method further comprises:
in response to the image to be processed being an uploaded image, displaying each of the target objects on a screen respectively.

4. The effect processing method of claim 3, wherein after displaying each of the target objects on the screen respectively, the method further comprises:
in response to an editing trigger operation for the image to be processed, updating screen display information of the target objects according to the edited image to be processed, wherein the editing trigger operation comprises at least one of an image adding operation, an image deleting operation, or an image cropping operation.

5. The effect processing method of claim 3, wherein displaying the effect image obtained by fusing the multiple target objects into the target template image comprises:
in response to the image to be processed being an uploaded image, displaying a first effect video, wherein the first effect video comprises the image to be processed, the target objects displayed on the screen, a preset transition image, and the effect image obtained by fusing the multiple target objects into the target template image, which are displayed in sequence.

6. The effect processing method of claim 1, wherein after acquiring the at least one image to be processed and before displaying the effect image obtained by fusing the multiple target objects into the target template image, the method further comprises:
in response to the image to be processed satisfies a preset image detection condition, extracting one or more target objects comprised in the image to be processed, wherein the image detection condition comprises at least one of: the image to be processed comprising a preset object, the image to be processed not comprising preset content, or an image quality indicator of the image to be processed satisfying a preset indicator condition.

7. The effect processing method of claim 1, wherein after acquiring the at least one image to be processed and before displaying the effect image obtained by fusing the multiple target objects into the target template image, the method further comprises:
respectively determining, for each image to be processed, an image subject of a preset type; and
in response to the image subject satisfying a preset object detection condition, determining the image subject as the target object, wherein the object detection condition comprises at least one of: a display size of the image subject reaching a preset size, a size proportion of the image subject in the image to be processed reaching a preset proportion, posture information of the image subject satisfying a preset posture restriction condition, or a completeness of the image subject reaching a preset completeness.

8. The effect processing method of claim 1, wherein displaying the effect image obtained by fusing the multiple target objects into the target template image comprises:
in response to the image to be processed being a shooting image, displaying a second effect video, wherein the second effect video comprises the image to be processed, a preset transition image, and the effect image obtained by fusing the multiple target objects into the target template image, which are displayed in sequence.

9. The effect processing method of claim 1, wherein before displaying the effect image obtained by fusing the multiple target objects into the target template image, the method further comprises:
displaying at least one preset template image matching a total number of the target objects, wherein a total number of fusion regions comprised in the preset template image and used for fusing the target objects is greater than or equal to the total number of the target objects; and
in response to a selection trigger operation for the preset template image, determining a selected preset template image as the target template image.

10. The effect processing method of claim 1, wherein displaying the effect image obtained by fusing the multiple target objects into the target template image comprises:
determining an effect processing mode, and generating an effect video based on the effect processing mode, wherein the effect processing mode comprises a camera mode and an upload mode; and at least part of video content generated under the camera mode and the upload mode is different.

11. The effect processing method of claim 10, wherein determining the effect processing mode comprises:
determining the effect processing mode to be the upload mode in response at least one image being selected and the selected image comprising at least one target object; and
determining the effect processing mode to be the camera mode in response to no image being selected or the selected image not comprising the target object.

12. The effect processing method of claim 1, wherein a total number of fusion regions comprised in the target template image and used for fusing the target objects is greater than or equal to a total number of the target objects; and the fusion regions comprise preset fusion regions and/or regions of the target template image comprising image content of a same type as the target objects.

13. An effect processing apparatus, comprising:
an image setting module, configured to acquire at least one image to be processed in response to an image setting trigger operation, wherein a number of target objects comprised in all images to be processed is multiple; and
an effect display module, configured to display an effect image obtained by fusing the multiple target objects into a target template image in response to an effect displaying trigger operation.

14. An electronic device, comprising:
one or more processors; and
a storage configured to store one or more programs,
wherein the one or more programs, when executed by the one or more processors, cause the one or more processors to implement the effect processing method of any of claims 1 to 12.

15. A storage medium comprising computer executable instructions, wherein the computer executable instructions, when executed by a computer processor, are configured to perform the effect processing method of any of claims 1 to 12.
